# EUROPÄISCHE PATENTSCHRIFT

(11) **EP 0 685 546 B1**
(45) Veröffentlichungstag und Bekanntmachung des Hinweises auf die Patenterteilung: **24.01.2001**
(21) Anmeldenummer: 95106310.6
(22) Anmeldetag: 27.04.1995
(51) Int. Cl.: C09J 7/04, C09J 11/04

(54) **Gewebeklebeband**
Fabric adhesive tape
Ruban adhésif tissé

(30) Priorität: 01.06.1994 DE 4419169
(43) Veröffentlichungstag der Anmeldung: 06.12.1995
(73) Patentinhaber: Beiersdorf Aktiengesellschaft, 20245 Hamburg (DE)
(72) Erfinder: Spies, Manfred, Dr., D-35216 Biedenkopf 2 (DE); Leydecker, Heiko, D-24730 Neustadt/Holstein (DE); Külper, Klaus, Dr., D-25421 Pinneberg (DE)

(56) Entgegenhaltungen:
- EP-A- 0 038 899
- DATABASE WPIL, Nr. 93-071 310, DERWENT PUBLICATIONS LTD., London; & JP-A-05 017 727 (TOPPAN PRINTING CO. LTD.)

## Beschreibung

Die Erfindung betrifft ein Gewebeklebeband zum Bandagieren von Kabelbäumen, insbesondere ein halogenfreies schwerentflammbares Gewebeklebeband mit öl-, diesel- und benzinbeständigen Eigenschaften. Damit betrifft die Erfindung die Entwicklung eines halogenfreien schwerentflammbaren Gewebeklebebandes, bestehend aus einem flammgeschützten Trägergewebe und einer Klebemasse auf der Basis von Acrylaten oder Kautschuken, der anorganische Phosphate als Flammschutzmittel zugemischt sind, und die des weiteren eine gute Beständigkeit gegenüber im Motorraum üblichen Flüssigkeiten zeigt.

In der Automobil- und Flugzeugindustrie werden einzelne, parallel verlaufende Elektrokabel an bestimmten Stellen zu sogenannten Kabelbäumen zusammengefaßt. Das Bandagieren dieser Kabelbäume erfolgt schwerpunktmäßig mit Gewebekiebebändern.

Da diese Kabelbäume im Motorraum häufig mit unpolaren Flüssigkeiten wie Öl oder Dieselkraftstoff in Berührung kommen, was zu einem Auflösen der Wicklung führen kann, werden im allgemeinen Klebebänder gewünscht, deren Klebemassen resistent gegenüber den genannten Flüssigkeiten sind. Des weiteren führt ein angelöster, durch das Trägermaterial hindurch diffundierter, Klebstoff zu Stellen, an denen sich Schmutzpartikel verstärkt sammeln.

Klebebänder, die aus einem geschlossenen Gewebe bestehen, scheiden aus Kostengründen für derartige Anwendungen häufig aus. Zu der Anforderung der Öl- und Kraftstoffbeständigkeit ist in den letzten Jahren aus Sicherheitsgründen die weitere Anforderung der Schwerentflammbarkeit hinzugekommen. Entsteht im Motorraum z.B. in Folge eines elektrischen Kurzschlusses ein Kabelbrand, so können sich die Flammen durch brennbare Bandagierungsmaterialien leichter fortbewegen, und so die Fahrgastzelle gefährden. Dies geschieht noch leichter, wenn sich Öl- oder Kraftstoffreste vermischt mit Schmutzpartikeln auf dem Kabelbaum anreichern, begünstigt durch eine durch das Trägermaterial hindurchdiffundierte angelöste Klebemasse.

Halogen- und antimonhaltige Flammschutzmittel für Polymere sind in der Literatur einschlägig bekannt und beschrieben (vgl. z.B. H. Batzer, Polymere Werkstoffe, Bd. II, S. 354 (1984) oder Gächter/Müller, Kunststoff-Additive, S. 737 (1989)). In der jüngeren Patentliteratur gibt es ebenfalls einige Veröffentlichungen, bei denen derartige Systeme für schwerentflammbare Selbstklebebänder eingesetzt werden, so in der DE 4209210 A1. Darin werden halogen- und antimonhaltige Zusätze verwendet, die jedoch in Selbstklebemassen bedenklich hinsichtlich ihrer Toxizität sind. Schwerentflammbare halogen- und antimonfreie Gewebeklebebänder für die Kabelbandagierung, die des weiteren unempfindlich sind gegenüber im Motorraum üblichen unpolaren Flüssigkeiten, sind gänzlich unbekannt.

Ziel dieser Erfindung war es, ein entsprechendes Klebeband zu entwickeln, um so die vorhandene Lücke zu schließen. Demgemäß betrifft die Erfindung ein Gewebeklebeband zum Bandagieren von Kabelbäumen, wie dies in den Patentansprüchen näher gekennzeichnet ist.

Dabei wirken der offene Gewebeträger und die polare Selbstklebemasse in besonderer Weise zusammen. Denn zum einen ist der Gewebeträger angemessen flammgeschützt, zugleich aber hilft die polare Selbstklebemasse mit ihrem eigenen angemessenen Flammschutz dem gleichen Ziel, und schließlich gibt die Polarität der Selbstklebemasse dieser eine Beständigkeit gegen unpolare Lösungsmittel, die zudem für Motorräume und dergleichen günstig ist. Denn dadurch wird verhindert, daß ein durch z.B. Öl oder Dieselöl angelöstes Band beschädigt oder gar gelockert wird und in diesem Zustand besonders anfällig im Falle eines Brandes ist, insbesondere auch im Hinblick auf durch das Trägermaterial hindurchdiffundierte angelöste Klebemassebestandteile, die Schmutzpartikel und Ölreste anreichern können.

Das erfindungsgemäße Gewebeklebeband ist damit in besonderer Weise zum Bandagieren von Kabelbäumen geeignet und zeichnet sich durch eine gute Beständigkeit gegenüber im Motorraum üblichen Flüssigkeiten wie z.B. Öl, Dieselkraftstoff oder Benzin aus. Die bevorzugt einzusetzenden Materialien sollen im folgenden näher erläutert werden.

### Trägermaterialien

Als Trägermaterialien für Kabelbandagierungs-Selbstklebebänder werden häufig Gewebeträger verwendet, die gegenüber Folien diverse Vorteile bieten. Gewebeträger beinträchtigen die ursprüngliche Kabelbaum-Flexibilität nur sehr geringfügig, Klappergeräusche können vermieden werden, des weiteren sind höhere Temperaturbelastungen möglich.

Für den Zweck der Erfindung eignen sich Polyestergewebe, Zellwollgewebe oder Baumwollgewebe. Dabei zeichnen sich Polyestergewebe durch gute Abriebsfestigkeiten aus, eine Eigenschaft, die diese Träger besonders geeignet für die erfindungsgemäßen Zwecke macht, da ein abgeriebenes Band sowohl hinsichtlich Festigkeit als auch Entflammbarkeit nachteilig ist. Die physikalischen Daten des Gewebes sind in weiten Grenzen variabel. Für Bandagierungsanwendungen werden Trägerdicken in einem Bereich zwischen 100 und 500 um bevorzugt, geeignete Fadenzahlen sind etwa 20 Fäden/cm Kette bzw. 20 Fäden/cm Schuß.

Der Gewebeträger wird halogen- und antimonfrei flammgeschützt und kann insbesondere mit einer Lösung eines anorganischen Phosphates oder Hydroxides, bevorzugt Ammoniumpolyphosphat, schwerentflammbar gemacht werden. Der Gehalt an Ammoniumpolyphosphat sollte in einem Bereich zwischen 10 und 100 g/m², bevorzugt 30 g/m² liegen. Bei einem zu hohen Gehalt an Flammschutzmittel verliert das Gewebe seine für die Anwendung notwendige Flexibilität.

### Klebemassen

Als Klebemassen können insbesondere Polyacrylat- und modifizierte Kautschuksysteme verwendet werden, denen ein erfindungsgemäßes Flammschutzmittel zugesetzt wurde. Dabei gibt die polare Natur der Gerüstpolymeren den Klebemassen eine Resistenz gegenüber im Motorraum vorkommenden Flüssigkeiten wie Öl oder Dieselkraftstoff.

Aus der Gruppe der Polyacrylate eignen sich besonders Copolymere auf der Basis von Acrylsäureestern mit kurzen Kohlenstoffseitenketten bis 8 C-Atome und Acrylsäure besonders gut. Es können sowohl Lösungsmittelsysteme als auch Dispersionen eingesetzt werden, wobei Dispersionen den Vorteil der Restlösungsmittelfreiheit zeigen. Durch Mischen der Polyacrylatdispersionen mit entsprechenden Klebrigmachern (wasserbasierend) lassen sich die klebtechnischen Eigenschaften variieren. Carboxylgruppenhaltige Acrylsäureestercopolymere sind am Markt erhältlich.

Aus der Gruppe der modifizierten Kautschuke eignen sich Gerüstpolymere auf der Basis von Nitritkautschuk oder epoxidiertem Kautschuk besonders gut. Bei beiden Varianten liegt eine gegenüber Naturkautschuk drastisch gesteigerte Polarität vor, so daß die Löslichkeit in unpolaren Lösungsmitteln deutlich herabgesetzt ist. Im Falle der Kautschuksysteme werden den Gerüstpolymeren vorteilhaft für eine Klebemasse übliche Additive zugesetzt, insbesondere Klebrigmacher, Alterungsschutzmittel und Füllstoffe.

Den Polyacrylat- und Kautschukklebstoffen werden dann halogen- und antimonfreie Flammschutzmittel, insbesondere anorganische Phosphate oder Hydroxide, bevorzugt Ammoniumpolyphosphat zugesetzt, um schwerentflammbare bzw. selbstverlöschende Systeme zu erhalten. Die Konzentration an Flammschutzmittel sollte in einem Bereich zwischen 5 und 40 %, bevorzugt in einem Bereich zwischen 7,5 und 15 % bezogen auf den Feststoffgehalt liegen. Um eine optimale Flammschutzwirkung zu erzielen, muß das Flammschutzmittel in der Klebemasse homogen verteilt vorliegen.

Die Klebemassen können ferner mit üblichen Vernetzungsagenzien wie z.B. Aluminiumchelat, Titanchelat oder Adiperisäure-Dihydrazid chemisch vernetzt werden, eine physikalische Vernetzung (ESH) ist ebenfalls möglich.

### Lack

Bei vorliegen technischer Gründe für die Verwendung einer nur schwach polaren Klebemasse kann das Trägergewebe rückseitig mit einem Lack, insbesondere einem nicht klebenden, carboxylgruppenhaltigen Acrylsäureestercopolymeren beschichtet werden, dem ebenfalls Flammschutzmittel in der beschriebenen Konzentration zugemischt sein können. Das Lösungsvermögen der unpolaren Klebemasse wird dadurch nach der Applikation als Kabelbandagierungsband herabgesetzt. Dennoch bleibt trotz dieser Lackierung der Gewebeträger offen. Und gleichwohl verhindert diese Lackierung den Angriff von Lösungsmitteln auf die Selbstklebemasse, die Lösungsmittelempfindlichkeit wird selbst bei weniger polaren Klebemassen entscheidend verbessert.

Im folgenden soll die Erfindung anhand von Ausführungsbeispielen erläutert werden, ohne diese damit ungerechtfertigt beschränken zu wollen.

### Beispiel 1

In einem 50 Liter fassenden Plastikgefäß werden 15,272 kg Primal PS 83 D (Rohm und Haas) mit 1 kg Snowtack SE 380 A (Eka Nobel) sorgfältig gemischt. Anschließend wird 1 kg Ammoniumpolyphosphat zu dieser Mischung hinzugegeben und für etwa 30 Minuten gerührt. Um die Viskosität des Gesamtsystems anzuheben, wird mit 0,333 kg Collacral HP (BASF) verdickt.

Auf ein sorgfältiges Homogenisieren ist bei allen Zugaben zu achten.

Die so erhaltene Klebemasse wird im Vollstrich kontinuierlich mit einer Schichtdicke von etwa 80/m² auf ein Trennpapier oder eine Trennfolie beschichtet und nach dem Trocknen auf ein mit Ammoniumpolyphosphat ausgerüstetes Polyestergewebe mit einer Fadenzahl von 20 Fäden/cm Kette und 22 Fäden/cm Schuß, einer Dicke von 300 um und einer Reißkraft von > 150N/cm umkaschiert. Technische Bedingungen:
- Maschine:: Hängebeschichtungsanlage
- Auftragswerk:: Streichbalken
- Trägerbahngeschwindigkeit:: 50 m/min

Das beschichtete Gewebe wird anschließend thermisch getrocknet.
- Trocknungstemperaturen:: Vorkanal 60° C
Zone 1 70° C, Zone 2 80° C
Zone 3 90° C, Zone 4 100° C
Zone 5 100° C, Zone 6 120° C
Zone 7 120° C, Zone 8 120° C
Zone 9 120° C

Das erhaltene Produkt erweist sich nach der Prüfmethode USA-Norm FMVSS 302 als schwer entflammbar und ergibt bei der Kabelbandagierung hervorragende Ergebnisse.

### Beispiel 2

In einem 50 Liter fassenden Plastikgefäß werden 19,090 kg eines radikalisch polymerisierten Perlpolymerisates (Feststoffgehalt 44 %), bestehend aus 75 % Butylacrylat, 15 % 2-Ethylhexylacrylat und 5 % Acrylsäure (bezogen auf den Feststoffgehalt) mit 1 kg Snowtack SE 380 A (EKA Nobel) sorgfältig gemischt. Anschließend wird 1 kg Ammoniumpolyphosphat zu dieser Mischung hinzugegeben und für etwa 30 Minuten intensiv gerührt, um eine homogene Verteilung des Flammschutzmittels zu erzielen. Die Viskosität des Gesamtsystems wird mit 0,333 kg Collacral HP (BASF) angehoben. Die so erhaltene Klebemasse wird im Vollstrich kontinuierlich mit einer Schichtdicke von eta 60 g/m² auf ein mit Ammoniumpolyphosphat ausgerüstetes Polyestergewebe gemäß Beispiel 1 aufgetragen.

Technische Bedingungen:
- Maschine:: Hängebeschichtungsanlage
- Auftragswerk:: Streichbalken
- Trägerbahngeschwindigkeit:: 50 m/min

Das beschichtete Gewebe wird anschließend thermisch getrocknet.
- Trocknungstemperaturen:: Vorkanal 60 ° C
Zone 1 70° C, Zone 2 80° C
Zone 3 90° C, Zone 4 100° C
Zone 5 110° C, Zone 6 120° C
Zone 7 130° C, Zone 8 130° C
Zone 9 130° C

Das erhaltene Produkt erweist sich nach der Prüfmethode USA-Norm FMVSS 302 als schwerentflammbar und eignet sich wie das Produkt gemäß Beispiel 1.

## Patentansprüche

1. Gewebeklebeband zum Bandagieren von Kabelbäumen mit
a) einem offenen Gewebeträger, der mit einem halogen- und antimon-freien Flammschutzmittel ausgerüstet ist
b) einer polaren, mit einem halogen- und antimon-freien Flammschutzmittel ausgerüsteten Selbstklebemasse.

2. Gewebeklebeband nach Anspruch 1, dadurch gekennzeichnet, daß der Gewebeträger mit anorganischen Phosphaten oder Hydroxiden, bevorzugt Ammoniumpolyphosphat, imprägniert ist.

3. Gewebeklebeband nach Anspruch 1, dadurch gekennzeichnet, daß der Gewebeträger ein Zellwoll- oder Baumwollgewebe, insbesondere aber ein Polyestergewebe ist.

4. Gewebeklebeband nach Anspruch 1, dadurch gekennzeichnet, daß eine Selbstklebemasse vom Typ eines Acrylats oder modifizierten Kautschuks eingesetzt wird, die eine geringe Löslichkeit in unpolaren Flüssigkeiten zeigt.

5. Gewebeklebeband nach Anspruch 1, dadurch gekennzeichnet, daß die Selbstklebemasse mit anorganischen Phosphaten oder Hydroxiden, bevorzugt Ammoniumpolyphosphat, ausgerüstet ist.

6. Gewebeklebeband nach Anspruch 1, dadurch gekennzeichnet, daß Gewebeträger mit einem Rückseiten-Lack ausgerüstet ist, insbesondere mit einem Acrylat, bevorzugt einem thermisch vernetzbaren carboxylgruppenhaltigen Acrylsäureestercopolymeren.

7. Verwendung eines Gewebeklebebandes nach einem der Ansprüche 1-6 zum Bandagieren von Kabelbäumen.

## Claims

1. Fabric adhesive tape for wrapping cable harnesses, having
a) a permeable fabric base containing a halogen- and antimony-free flameproofing agent and
b) a polar self-adhesive composition containing a halogen- and antimony-free flameproofing agent.

2. Fabric adhesive tape according to Claim 1, characterized in that the fabric base has been impregnated with inorganic phosphates or hydroxides, preferably ammonium polyphosphate.

3. Fabric adhesive tape according to Claim 1, characterized in that the fabric base is a viscose staple or cotton fabric, but in particular a polyester fabric.

4. Fabric adhesive tape according to Claim 1, characterized in that a self-adhesive composition of the acrylate or modified rubber type is employed which has low solubility in nonpolar liquids.

5. Fabric adhesive tape according to Claim 1, characterized in that the self-adhesive composition contains inorganic phosphates or hydroxides, preferably ammonium polyphosphate.

6. Fabric adhesive tape according to Claim 1, characterized in that the fabric base is coated on the reverse, in particular with an acrylate, preferably a thermally crosslinkable, carboxyl-containing acrylate copolymer.

7. Use of a fabric adhesive tape according to one of Claims 1 - 6 for wrapping cable harnesses.

## Revendications

1. Ruban adhésif tissé en vue du bandage de harnais de câbles ayant
a) un support de tissu ouvert, qui est pourvu d'un agent ignifuge exempt d'halogènes et d'antimoine,
b) une masse auto-adhésive polaire, pourvue d'un agent ignifuge exempt d'halogènes et d'antimoine.

2. Ruban adhésif tissé selon la revendication 1, caractérisé en ce que le support de tissu est imprégné de phosphates ou d'hydroxydes inorganiques, de préférence de polyphosphate d'ammonium.

3. Ruban adhésif tissé selon la revendication 1, caractérisé en ce que le support de tissu est un tissu de laine de cellulose ou de coton, en particulier cependant un tissu de polyester.

4. Ruban adhésif tissé selon la revendication 1, caractérisé en ce que l'on utilise une masse auto-adhésive du type d'un acrylate ou d'un caoutchouc modifié, qui manifeste une solubilité faible dans les liquides non polaires.

5. Ruban adhésif tissé selon la revendication 1, caractérisé en ce que la masse auto-adhésive est pourvue de phosphates ou d'hydroxydes inorganiques, de préférence de polyphosphate d'ammonium.

6. Ruban adhésif tissé selon la revendication 1, caractérisé en ce que le support de tissu est pourvu d'une laque sur la face verso, en particulier d'un acrylate, de préférence d'un copolymère d'ester acrylique, contenant des groupements carboxyles, à réticulation thermique.

7. Utilisation d'un ruban adhésif tissé selon l'une quelconque des revendications 1 à 6, en vue du bandage de harnais de câbles.
